# EUROPÄISCHE PATENTSCHRIFT

(11) **EP 1 358 742 B1**
(45) Veröffentlichungstag und Bekanntmachung des Hinweises auf die Patenterteilung: **04.04.2012**
(21) Anmeldenummer: 02701227.7
(22) Anmeldetag: 07.02.2002
(51) Int. Cl.: H04L 12/58, H04M 3/42, H04W 4/12

(54) **VERFAHREN ZUR NACHRICHTENVERSENDUNG AUS EINEM MMS-SYSTEM UND EINRICHTUNG HIERFÜR**
METHOD FOR SENDING MESSAGES FROM AN MMS-SYSTEM AND A DEVICE THEREFOR
PROCEDE POUR ENVOYER DES MESSAGES A PARTIR D'UN SYSTEME MMS ET DISPOSITIF CORRESPONDANT

(30) Priorität: 07.02.2001 DE 10105797; 08.02.2001 DE 10106127; 29.08.2001 DE 10142270
(43) Veröffentlichungstag der Anmeldung: 05.11.2003
(73) Patentinhaber: SIEMENS AKTIENGESELLSCHAFT, 80333 München (DE)
(72) Erfinder: JERBI, Belhassen, 81825 München (DE); TRAUBERG, Markus, 38159 Velchede (DE); LAUMEN, Josef, 31141 Hildesheim (DE); SCHMIDT, Andreas, 38114 Braunschweig (DE); VAN NIEKERK, Sabine, 38228 Salzgitter (DE)
(86) Internationale Anmeldenummer: PCT/DE2002/000239
(87) Internationale Veröffentlichungsnummer: WO 2002/063838

(56) Entgegenhaltungen:
- EP-A- 1 047 243
- US-A- 5 946 629

## Beschreibung

Die Erfindung betrifft ein Verfahren zur Nachrichtenversendung aus einem MMS-System (Multimedia Messaging Service), insbesondere zur Versendung von Emails, Fax, SMS etc., von einer Teilnehmereinrichtung im MMS-System an eine Teilnehmereinrichtung eines weiteren Systems, und eine Einrichtung hierfür.

Für die Versendung von Nachrichten zwischen Teilnehmereinrichtungen, die in einem MMS- (Multimedia Messaging Service) Netzwerk eingebunden sind, wurden Standards definiert bzw. vorgeschlagen. Gemäß dieser Standards werden die von einer Teilnehmereinrichtung zu sendenden Nachrichten in einer festgelegten Form und mit vorgegebenen Inhaltskategorien versandt. Die vorgeschlagenen Standards und die Details hierzu sind z.B. veröffentlicht in: [1] "3G TS 23.140 Version 4.1.0, Release 4; Third Generation Partnership Project; Technical Specification Group Terminals; Multimedia Messaging Service (MMS); Functional Description; Stage 2" oder [2] "WAP-209-MMS-Encapsulation; Wireless Application Protocol; WAP Multimedia Messaging Service; Message Encapsulation; MMS Proposed SCD 1.0".

Der Inhalt einer solchen Nachricht ist z.B. eine Email, ein Fax, eine SMS-Kurznachricht (Short Message Service), eine Textdatei, eine Grafikdatei, eine Audiodatei, eine Videodatei und dergleichen. Eine Teilnehmereinrichtung ist hier beispielsweise eine WAP- (Wireless Application Protocol) fähige Mobilfunkeinrichtung oder eine UMTS-Mobilfunkeinrichtung. Beim Versenden der Nachricht wird dieser ein Header bzw. Kopffelder vorangestellt, der z.B. die in Tabelle 1 (siehe unten) dargestellten Informationselemente umfaßt (mit Ausnahme des unten beschriebenen, erfindungsgemäßen Informationselements).

Bei dieser Nachrichtenübermittlung zwischen den Teilnehmereinrichtungen wird jedoch davon ausgegangen, daß sowohl die absenderseitige Teilnehmereinrichtung als auch die empfängerseitige Teilnehmereinrichtung entweder dem selben MMS-Netzwerk angehören oder beide Einrichtungen in verschiedenen MMS-Netzwerken eingebunden sind. Ein Nachrichtenaustausch kann somit nur dann erfolgen, wenn beide Teilnehmereinrichtungen MMS-fähig sind und jede in ein MMS-fähiges Netzwerk bzw. Kommunikationssystem eingebunden ist.

Aus der EP 1 047 243 A2 ist ein Verfahren zur Übertragung von Multimedianachrichten in einem Kommunikationssystem bekannt, bei dem das Kommunikationssystem zumindest ein erstes Kommunikationsnetzwerk, ein zweites Kommunikationsnetzwerk sowie ein Switching Center für Multimedianachriten (MMSC) aufweist, wobei im ersten Netzwerk ein erster und im zweiten Netzwerk ein zweiter Adresstyp als Engeräteadresse verwendet wird und die Adresse eines empfangenden Endgerätes der Multimedianachricht angehängt wird. Der Nachricht wird zudem der Adresstyp beigefügt, so dass aufgrund des Adresstyps das MMSC das Kommunikationsnetzwerk auswählen kann, welches zur Übermittlung zum empfangenden Endgerät genutzt werden soll.

Es ist daher Aufgabe der Erfindung, ein Verfahren zur Übermittlung einer Nachricht aus einem MMS-System und eine Einrichtung hierfür vorzusehen, mit denen das Weiterleiten der Nachricht an eine Teilnehmereinrichtung außerhalb eines MMS-Systems ermöglicht wird.

Diese Aufgabe wird mit den Merkmalen der unabhängigen Ansprüche gelöst.

Bei Empfängern bzw. empfängerseitigen Teilnehmereinrichtungen, welche weder dem absenderseitigen MMS-System angehören noch einem dem absenderseitigen MMS-System bekannten, zweiten MMS-System zugeordnet werden können, sind keine Regelungen festgelegt (siehe z.B. die Literaturstellen [1] und [2] oben), wie und an welche Art von System die versendete MMS-(Multimedia Message Service) Nachricht weitergeleitet werden soll, damit sie den oder die Empfänger erreicht.

Gemäß dem Verfahren nach Anspruch 1 wird vorgesehen, daß eine MMS-Nachricht von einer ersten Teilnehmereinrichtung aus einem MMS-fähigen System auch dann an eine zweite Teilnehmereinrichtung weitergeleitet werden kann, wenn die zweite Teilnehmereinrichtung nicht in ein MMS-fähiges System eingebunden ist. Letzteres ist der Fall, wenn z.B. entweder die zweite Teilnehmereinrichtung und/oder das Nachrichtenübermittlungssystem bzw. Kommunikationssystem, in das die zweite Teilnehmereinrichtung eingebunden ist, nicht nach dem MMS-Standard arbeitet.

Dazu erfolgt dann eine Konvertierung der MMS-Nachricht in das Nachrichtenformat des empfängerseitigen Kommunikationssystems, wenn die zweite Teilnehmereinrichtung in ein nicht-MMS-fähiges System eingebunden ist. Zur maximalen Informationsausnutzung, sowohl des Inhalts als auch begleitender Informationselemente der MMS-Nachricht, erfolgt die Konvertierung entsprechend einem Nachrichtenübermittlungsformat, das von der Teilnehmereinrichtung nutzbar ist und/oder nach dem das empfängerseitige Kommunikationssystem arbeitet.

Bei einer besonders vorteilhaften Ausgestaltung kann der Absender der MMS-Nachricht (Benutzer der ersten Teilnehmereinrichtung) festlegen, in welchem Nachrichtenübermittlungsformat die MMS-Nachricht weitergeleitet werden soll. Damit wird es einem Benutzer eines MMS-Systems ermöglicht, für den Empfänger einer Multimedianachricht festzulegen, über welche Kommunikationsmittel die Nachricht den Empfänger erreichen soll. Die Festlegung des Nachrichtenübermittlungsformats ist hier gleichbedeutend mit der Festlegung der Art der empfangenden Teilnehmereinrichtung (Fax, Telefon, SMS etc.) oder dem Kommunikationsweg zur Teilnehmereinrichtung (Telefon-Festnetz, Internet-Email etc.).

Vorteilhaft erfolgt die Festlegung bzw. Spezifizierung durch ein herkömmliches, aber modifiziertes oder ein zusätzliches Informationselement, mit dessen Hilfe der Absender einer Multimedianachricht beim Versenden dieser Multimedianachricht das Nachrichtenübermittlungssystem spezifizieren kann, welches vom absenderseitigen MMS-System für das Weiterleiten der Multimedianachricht zum Empfänger verwendet werden soll. Vorzugsweise ist das Informationselement ein Kopffeld einer MMS-Nachricht oder eine Ergänzung des Adress-Kopffelds.

Die Konvertierung wird vorzugsweise von einer Schnittstelleneinrichtung des absenderseitigen Kommunikationssystems durchgeführt. Damit ist für jedes MMS-Kommunikationssystem jeweils nur eine zentrale Einrichtung erforderlich, die die Konvertierung entsprechend der Standards anderer Kommunikationssysteme durchführt. Damit wird das Verfahren kostengünstig und schnell. Eine Schnittstelleneinrichtung ist dabei regelmäßig eine Servereinrichtung, eine Vermittlungseinrichtung oder dergleichen, die eine Vielzahl von systemzugehörigen Teilnehmereinrichtungen verwalten und deren Nachrichtenübermittlung innerhalb des absenderseitigen oder empfängerseitigen Systems handhaben.

Bei der Konvertierung der MMS-Nachricht werden besonders vorteilhaft die Informationselemente der MMS-Nachricht auf möglichst identische oder ähnliche Informationselemente für das empfängerseitige Kommunikationssystem abgebildet. Informationselemente sind z.B. Steuerbefehle, Kontrollfunktionen oder dergleichen, die Informationen zum Empfänger, zum Absender, zur Art der Übermittlung, zum Zeitpunkt der Übermittlung, zu Sicherheitsaspekten, zu Bestätigungsvorgängen oder dergleichen enthalten. Falls eine solche Konvertierung nicht erfolgen kann oder für den systemfremden Empfänger (Teilnehmereinrichtung) zusätzliche Informationen bereitgestellt werden sollen, können vorteilhaft diese Informationen in Textelement, Grafikelemente, Audioelemente oder dergleichen umgewandelt werden, die dann der Empfänger in seinem Nachrichtenformat erhält.

Die optionale Wahl verschiedener Stufen der Empfangsbestätigung ermöglicht dem Absender, den sicheren Erhalt oder die sichere Weiterleitung der MMS-Nachricht zu überprüfen.

Bei dem Verfahren gemäß Anspruch 9 wird eine Prioritätsreihenfolge festgelegt, mit der eine MMS-Nachricht von einer absenderseitigen Teilnehmereinrichtung an das eigene oder empfängerseitige Kommunikationssystem weitergeleitet wird.

Bei einer besonders vorteilhaften Ausgestaltung wird dabei das von der sendenden Teilnehmereinrichtung festgelegte Datenformat (Art der empfangenden Teilnehmereinrichtung oder Kommunikationsweg) berücksichtigt. Diese Berücksichtigung kann dabei eine hohe oder niedrige Priorität bei der Bearbeitungsreihenfolge annehmen.

Soll die MMS-Nachricht von der empfängerseitigen Teilnehmereinrichtung an mehrere Empfänger z.B. als Serienbrief oder als Kopie weitergeleitet werden, so werden alle angegebenen Teilnehmereinrichtungen (Empfänger) bei der Abfrage der Prioritätsreihenfolge entweder nacheinander in jeder Prioritätsstufe abgearbeitet oder jeder Empfänger wird für sich nach den Prioritätsstufen abgearbeitet.

Ausführungen der Erfindung werden nachstehend mit Hilfe von Zeichnungen näher erläutert. Es zeigen:
- Fig. 1: ein absenderseitiges und ein empfängerseitiges Kommunikationssystem mit verschiedenen empfängerseitigen Empfangseinrichtungen und
- Fig. 2: verschiedene Möglichkeiten der Empfangsquittierung für eine empfangene oder weitergeleitete Nachricht.

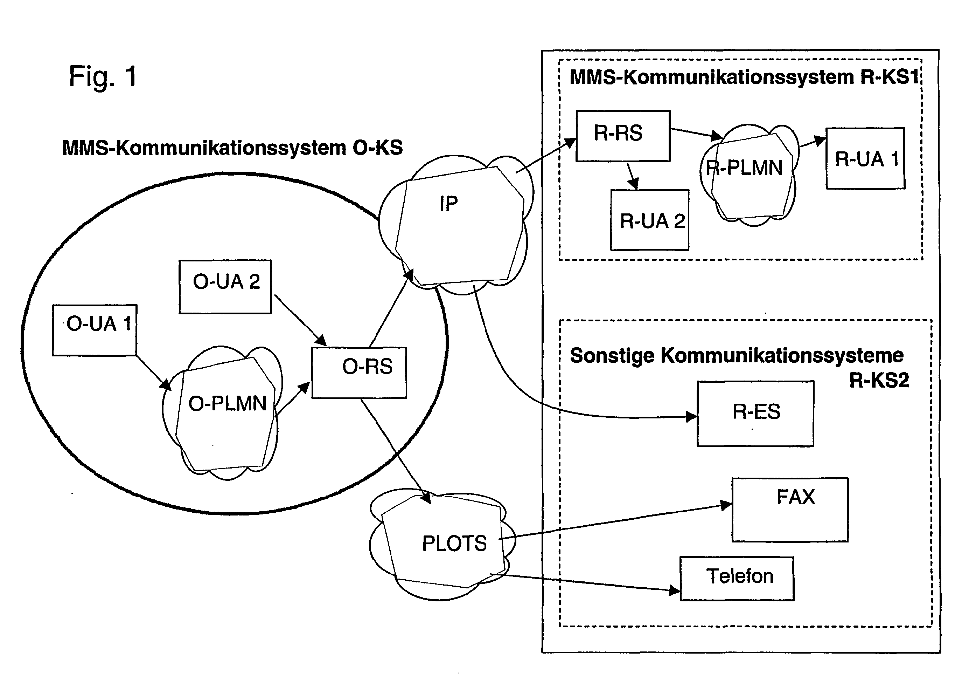

Figur 1 zeigt ein absenderseitiges Kommunikationssystem O-KS, das nach dem MMS-Standard arbeitet, und verschiedene empfängerseitige Kommunikationssysteme R-KS1, R-KS2. Die Kommunikationssysteme ermöglichen es einer Teilnehmereinrichtung bzw. einem Endgerät Nachrichten abzusenden und zu empfangen. In Fig. 1 ist mit den Pfeilen der Fall dargestellt, daß eine absenderseitige Teilnehmereinrichtung O-UA1 oder O-UA2 eine Nachricht für eine empfängerseitige Teilnehmereinrichtung R-UA1, R-ES, Fax oder Telefon absetzt.

Innerhalb des MMS-Kommunikationssystems O-KS ist jede Teilnehmereinrichtung O-UA1, O-UA2 dafür vorgesehen, eine MMS-Nachricht zu erstellen oder für den Benutzer umzusetzen. Das MMS-Kommunikationssystem O-KS stellt die Dienste-Umgebung für den Absender zur Verfügung. Die Teilnehmereinrichtungen O-UA, R-UA bzw. absender- oder empfängerseitigen Applikationen können dabei sogenannte MMS User Agents (UA) des Absenders bzw. Empfängers einer Nachricht sein. Beispiele für Inhalte von MMS-Nachrichten sind Emails, SMS (Short Message Service), Texte, Grafiken, Voice-Mail, Audio, Video und dergleichen, wie sie nach dem MMS-Standards festgelegt sind.

Von einer Teilnehmereinrichtung O-UA kann die Nachricht auf verschiedenen Wegen zu einem MMS-Relay/Server O-RS bzw. einer Netzwerkapplikation des Absenders übertragen werden. Dieser wird im folgenden kurz als Server O-RS bezeichnet. Die Teilnehmereinrichtung O-UA1 ist hier beispielsweise ein Mobilfunkgerät, wie ein Handy, das die MMS-Nachricht über ein Mobilfunknetz O-PLMN eines Netzbetreibers an den Server O-RS des Absenders weiterleitet. Die Teilnehmereinrichtung O-UA2 ist über eine Leitung mit dem Server O-RS verbunden. Die Verbindung zwischen Teilnehmereinrichtung O-UA2 und Server O-RS kann dabei durch ein Festnetz, ein Internet Protokoll basiertes Netzwerk, ein Intranet, eine Terminalverbindung oder dergleichen bereitgestellt werden. Die Teilnehmereinrichtung O-UA2 kann auch eine Applikation auf einem Festnetz-Computer sein.

Vom Server O-RS wird die Nachricht über ein Internet Protokollbasiertes Interimnetz IP (kurz Internet) an einen Netzbetreiber des Empfängers (Kommunikationssystem R-KS1, R-KS2) weitergeleitet. Zusätzlich oder alternativ kann die Nachricht über ein Festnetz PLOTS (Plain Old Telephone System), ein Intranet, eine Funkverbindung oder dergleichen weitergeleitet werden. Das Festnetz PLOTS ist hier z.B. das Festnetz der Deutschen Telekom.

Das empfängerseitige Kommunikationssystem R-KS1, R-KS2 repräsentiert hier ein Bündel verschiedener Kommunikationssysteme, die jeweils nach verschiedenen Standards arbeiten und entsprechend der jeweiligen Standards das Empfangen, Senden und/oder Weiterleiten von Nachrichten mit Standard-spezifischen Inhalten ermöglichen. Das Kommunikationssystem R-KS1, R-KS2 umfaßt auch ein MMS-fähiges Kommunikationssystem R-KS1, in das die Nachrichten aus dem absenderseitigen Kommunikationssystem O-KS ohne weitere Konvertierung direkt über das Internet IP im MMS-Format übertragen werden kann. Ein MMS-Relay/Server R-RS (kurz Server R-RS) des MMS-Kommunikationssystems R-KS1 auf der Empfängerseite leitet die aus dem Internet IP empfangene MMS-Nachricht über eine Leitung zu einer verbundenen Teilnehmereinrichtung R-UA2 oder z.B. über ein Mobilfunknetz R-PLMN, in das die Teilnehmereinrichtung R-UA1 eingebunden ist, an diese. Wie beim absenderseitigen Kommunikationssystem O-KS sind hier die Teilnehmereinrichtungen R-UA MMM-User Agents des Empfängers und für die Verbindung zwischen den Teilnehmereinrichtungen R-UA und dem Server R-RS gilt das für die Teilnehmereinrichtungen O-UA und den Server 0-RS beschriebene entsprechend.

Neben dem MMS-fähigen Kommunikationssystem R-KS1 kann die Nachricht dem Empfänger auch über andere Kommunikationssysteme R-KS2 zugesandt werden. Beispielsweise über ein Emailsystem R-ES des Empfängers, das im Beispiel von Fig. 1 über das Internet IP erreichbar ist, über ein Faxgerät FAX des Empfängers, ein Telefongerät des Empfängers oder dergleichen. Das Faxgerät und das Telefon sind über das Festnetz PLOTS erreichbar. Eine weitere, in Fig. 1 nicht dargestellte Teilnehmereinrichtung, kann z.B. SMS-Kurznachrichten empfangen, ohne jedoch MMS-fähig zu sein. Eine solche Teilnehmereinrichtung kann ein Handy sein, das z.B. in das Mobilfunknetz R-PLMN eingebunden ist.

Um die Nachricht an ein sonstiges Kommunikationssystem R-KS2 zu richten kann entweder durch den Absender (absenderseitige Teilnehmereinrichtung O-UA) oder den Server O-RS das zutreffende Kommunikationssystem R-KS1, R-KS2 festgelegt werden.

Bei einer ersten Ausführungsform sendet ein Absender mittels einer Teilnehmereinrichtung O-UA eines MMS-Kommunikaktionssystems O-KS eine Multimedianachricht MM an einen Empfänger, so wird diese Nachricht MM zunächst von der Teilnehmereinrichtung O-UA an den Server O-RS eingereicht. Der Server O-RS überprüft bei der Nachricht MM u.a., ob die Adressaten bzw. Empfänger der Nachricht MM dem absenderseitigen Kommunikationssystem O-KS bekannt sind, d.h. ob ein oder mehrere Adressaten ebenfalls dem absenderseitigen Kommunikationssystem O-KS zugehören.

Bei solchen Adressaten, welche nicht Teilnehmereinrichtungen O-UA des absenderseitigen Kommunikationssystem O-KS sind, überprüft der absenderseitige Server O-RS, ob ein oder mehrere dieser Adressaten als zu einem zweiten, dem absenderseitigen MMS-Kommunikationssystem O-KS bekannten Kommunikationssystem zugehörig identifiziert werden können. Der Adressat bzw. dessen Teilnehmereinrichtung könnte z.B. dem MMS-Kommunikationssystem R-KS1 angehören.

Bei solchen Adressaten, welche weder dem absenderseitigen Kommunikationssystem O-KS angehören, noch einem dem absenderseitigen Server O-RS bekannten, zweiten MMS-Kommunikationssystem (R-KS1) zugeordnet werden können, wird gemäß einer ersten Ausführungsform durch den Server O-RS die MMS-Nachricht MM in eine Internet Email konvertiert und als solche über das Internet IP z.B. an die Teilnehmereinrichtung R-ES versandt.

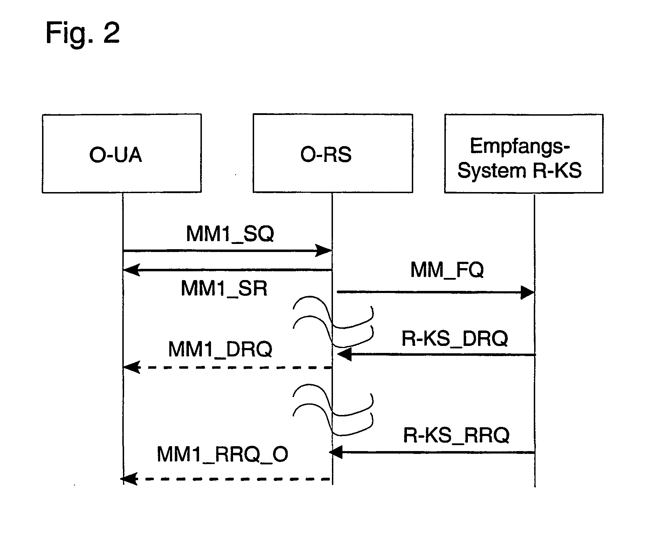

Bei dieser ersten Ausführungsform ist somit festgelegt, wie die Nachricht den Empfänger erreicht, wenn dieser nicht über ein MMS-Kommunikationssystem (O-KS, R-KS1) erreichbar ist. Wie später zu Fig. 2 beschrieben wird, erhält der Absender bei Bedarf (siehe Tabelle 1) eine Bestätigung, ob die Nachricht vom Server O-RS empfangen und/oder weitergeleitet wurde, und ob der Empfänger diese erhalten und/oder geöffnet hat. Falls hier der Empfänger auch nicht über Email (R-ES) zu erreichen ist, erhält der Absender (Teilnehmereinrichtung O-UA) eine entsprechende Negativ-Nachricht.

Gemäß der ersten Ausführungsform können die Nachrichten MM nicht an solche Empfänger bzw. Teilnehmereinrichtungen weitergeleitet werden, welche nicht per MMS-Kommunikationssystem (O-KS, R-KS1) oder Email (R-ES), sondern lediglich.z.B. über ein Faxgerät oder per SMS-Kurznachrichten zu erreichen sind.

Bei einer zweiten Ausführungsform wird der Kommunikationsweg zumindest teilweise durch eine Teilnehmereinrichtung O-UA bzw. dessen Teilnehmer festgelegt, wobei der Empfänger bzw. die empfängerseitige Teilnehmereinrichtung R-UA, R-ES, Fax, Telefon, SMS z.B. mittels einer Email-ähnlichen Adresse oder einer Telefonnummer adressiert wird. Hierbei stellen die empfängerseitige Teilnehmereinrichtungen und deren Kommunikationswege von Fig. 1 nur beispielhaft die empfängerseitigen Einrichtungen dar.

Die Festlegung der empfängerseitigen Teilnehmereinrichtung durch den Absender erfolgt z.B. dann, wenn der Empfänger oder die gewünschte Teilnehmereinrichtung einer Nachricht temporär oder permanent nicht über ein MMS-Kommunikationssystem O-KS, R-KS1 erreichbar ist oder aus Sicherheitsgründen oder dergleichen ein anderer Kommunikationskanal gewählt wird. Ein weiterer Bedarf besteht z.B. dann, wenn der Empfänger gleichzeitig über verschiedene Kommunikationskanäle angesprochen werden soll.

Dazu wird ein Informationselement bzw. Kopffeld vorgesehen, mit dessen Hilfe der Absender einer Nachricht MM bei deren Versenden das Nachrichtenübermittlungssystem spezifizieren kann, welches vom absenderseitigen MMS-Kommunikationssystem O-KS für das Weiterleiten der MMS-Nachricht zum Empfänger verwendet werden soll. Dabei entspricht sinnvollerweise die Spezifikation durch den Absender dem Gerätetyp des vom Empfänger tatsächlich benutzten Endgerätes bzw. der tatsächlichen Teilnehmereinrichtung.

Je nachdem welcher Art die Teilnehmereinrichtung des Empfängers ist - z.B. MMS-Applikation O-UA, R-UA, Internet-Email R-ES, Telefon oder FAX -, wird die vom Absender verschickte Nachricht MM vom absenderseitigen Server O-RS in ein an das empfängerseitige Kommunikationssystem R-KS2 angepaßte Nachrichtenformat konvertiert und mittels dem Empfängersystem entsprechenden Transferprotokollen zum Empfängersystem übertragen. Z.B. wird eine Nachricht MM, welche zu einem Faxgerät übertragen werden soll, vom Server O-RS in ein (virtuelles) Bild konvertiert, welches über ein Faxprotokoll an das Faxgerät FAX des Empfängers versendet wird. Ebenso werden Bestätigungsinformationen (s.u.) der MMS-Nachricht MM in Bestätigungsanforderungen umgewandelt, die vom empfängerseitigen Kommunikationssystem R-KS2 weitergeleitet und/oder verarbeitet werden können.

Bei der Konvertierung werden möglichst viele Kontroll-Informationen, welche in der versandten Nachricht MM stehen, vom Server O-RS ausgewertet und in Kontrollfunktionen des jeweiligen Empfängersystems umgesetzt. Z.B. werden die Empfängeradressen der Nachricht MM vom Server O-RS ausgewertet und als Rufnummern erkannt, welche per Faxprotokoll angewählt werden. Diese und andere Informationen der Nachricht MM, welche nicht umgesetzt werden, können dem Empfänger als Inhalt der konvertierten Nachricht zugänglich gemacht werden.

Wurden z.B. eine erste Empfängeradresse mit einem Faxgerät als Teilnehmereinrichtung als "To: +495341xxxxxx" und eine zweite Empfängeradresse mit einem Faxgerät als Teilnehmereinrichtung mittels "CC: +4989xxxxxx" spezifiziert, so werden an beide Faxgeräte jeweils ein Fax mit der konvertierten Nachricht MM gesendet. Daß es sich bei dem ersten Empfänger um den direkten Empfänger ("To:") handelt, während der zweite lediglich eine Kopie, bzw. einen Durchschlag ("CC:") bekommt, diese Information erhält der jeweilige Empfänger dadurch, daß die Informationen "To: +495341xxxxxx" und "CC: +4989xxxxxx" als zusätzlicher Text auf dem Fax erscheinen. Z.B. in Form einer ersten Fax-Seite, die die konvertierten MMS-Informationen als Protokollfeld bzw. "Kopffeld" in Text- oder Grafikform beinhaltet.

Das Informationselement zur Spezifizierung des Übertragungsweges und/oder der empfängerseitigen Teilnehmereinrichtung kann dabei entweder durch die Angabe einer oder mehrerer Emfänger-Adressen (bei Kopienversand) oder durch ein zusätzliches, optionales Informationselement im Header der MMS-Nachricht MM erfolgen. Der Empfängeradresse kann z.B. ein Kennzeichen zugefügt werden, das die Art der Teilnehmereinrichtung und/oder den Kommunikationsweg spezifiziert. Alternativ kann der Server O-RS aufgrund z.B. der Codierung der Empfängeradresse auf die empfängerseitige Teilnehmereinrichtung schließen. Enthält die Adresse z.B. den Bestandteil "@" so kann auf eine Internet-Emailadresse (R-ES) geschlossen werden.

Ein zusätzliches, optionales Informationselement des Headers der MMS-Nachricht kann die Art der empfängerseitigen Teilnehmereinrichtung z.B. explizit spezifizieren.

Tabelle 1 zeigt in Fettdruck und kursiv wie bei einem MMS-Nachrichten-Header, wie er z.B. aus den oben erwähnten Schriften [1] und [2] bekannt ist, ein Absender einer Nachricht MM beim Versand dieser Nachricht MM an einen absenderseitigen Server O-RS ein zusätzliches Informationselement spezifiziert bzw. festlegt.

In einer WAP-Implementierung des MMS-Dienstes kann, angelehnt an [2], ein beispielhafter Versand einer Nachricht MM in textueller Kodierung demnach wie folgt aussehen:
X-Mms-Message-Type: m-send-req
X-Mms-Transaction-ID: 123456789
X-Mms-Version: 1.0
To: +495341xxxxxx
From: josef.xxxxxx@mms-xxxxxx.de
X-MMS-Message-Class: Personal
Date: Fri, 07 Feb 2001 09:58:19 +0100
X-MMS-Expiry: Fri, 07 Feb 2001 12:00:00 +0100
X-MMS-Delivery-Time: Fri, 07 Feb 2001 11:00:00 +0100
X-Mms-Priority: High
X-MMS-Delivery-Report: Yes
X-MMS-Read-Reply: Yes
X-MMS-Sender-Visibility: Yes
Subject: Foto vom Laboraufbau
**X-Mms-communication-means: *Facsimile***
Content-Type: text/plain;
Hallo Markus,
schicke mir bitte ganz dringend das Bild von unserem Laboraufbau zu!
Mit freundlichen Grüßen Josef XXXXXX

In diesem Beispiel spezifiziert "X-Mms-Message-Type: m-send-req" diese Nachricht als eine von einem Absender zu einem absenderseitigen Server RS verschickte Nachricht MM, welche vom der Teilnehmereinrichtung O-UA eine Transaktionskennung "X-Mms-Transaction-ID: 123456789" zugewiesen bekommt. Diese Transaktionskennung wird benutzt, um in der Teilnehmereinrichtung O-UA die Bestätigung des Versands (s.u.) auf diesen Versand abbilden bzw. rückmelden zu können. Die Versionsnummer "X-Mms-Version: 1.0" wird zu Zwecken der Rückwärtskompatibilität benötigt.

Mit den Angaben "To: +495341xxxxxx", bzw. "From: josef.xxxxxx@mms-xxxxxx.de" legt der Absender die Empfängeradresse (in diesem Fall die Telefonnummer des Faxgeräts des Empfängers), bzw. seine eigene Adresse (z.B. für Antworten) fest. Wichtig ist hierbei, daß der Empfänger in diesem Beispiel mittels einer Telefonnummer adressiert wird. Die Angabe einer Telefonnummer alleine reicht aber bei diesem Beispiel noch nicht aus, um den Gerätetypen des Empfängers eindeutig zu kennzeichnen. Denn hinter einer ansonsten nicht spezifizierten Telefonnummer kann sich z.B.
- ein Festnetztelefon (welches lediglich Telefonanrufe als Sprache entgegennehmen kann),
- ein Mobilfunkgerät (welches z.B. SMS-Kurznachrichten und Sprachnachrichten auf einer Mailbox empfangen kann) oder
- auch ein Faxgerät (welches lediglich Faxe empfangen kann) verbergen.

Im obigen Beispiel wurde die Nachricht MM als eine persönliche Nachricht MM gekennzeichnet ("X-MMS-Message-Class: Personal") und mit einem Zeitstempel des Versands ("Date: Fri, 07 Feb 2001 09:58:19 +0100") versehen. Der Absender hat eine Gültigkeitsdauer für diese Nachricht MM durch die Angabe des Verfallszeitpunkts für die Nachricht MM ("X-MMS-Expiry: Fri, 07 Feb 2001 12:00:00 +0100") und die Angabe eines frühesten Zeitpunkts für das Weiterleiten/Aussenden der Nachricht MM ("X-MMS-Delivery-Time: Fri, 07 Feb 2001 11:00:00 +0100") bestimmt.

Da dem Absender diese Nachricht als wichtig erscheint, hat er ihr eine hohe Priorität zugeordnet ("X-Mms-Priority: High"). Mit "X-MMS-Delivery-Report: Yes" erzwingt er eine Rückmeldung vom Kommunikationssystem O-KS, R-KS1 oder R-KS2, sobald diese Nachricht MM an den Empfänger ausgeliefert wurde. Um zusätzlich sicherzustellen, daß er informiert wird, sobald der Empfänger diese Nachricht MM liest, fordert er eine Lesebestätigung an ("X-MMS-Read-Reply: Yes"). Da der Absender dem Empfänger gegenüber nicht anonym bleiben möchte, erlaubt er die Sichtbarkeit seiner Adresse ("X-MMS-Sender-Visibility: Yes"). Zum schnelleren Verständnis gibt er noch eine Betreffzeile ("Subject: Foto vom Laboraufbau") für diese Nachricht MM an.

Angenommen, der Absender weiß, daß der Empfänger (zur Zeit) nur oder am schnellsten über Fax erreichbar ist, so kann er gemäß der zweiten und dritten (s.u.) Ausführungsform das Kommunikationsmittel für das Weiterleiten/Aussenden dieser MM festlegen, indem er den Wert von "X-Mms-communication-means:" auf "Facsimile" setzt.

Weitere mögliche Werte für "X-Mms-communication-means:" sind:
- "MM": Um eine Nachricht MM möglichst nicht umzuwandeln, sondern als MM zu versenden;
- "E-Mail": für eine Umwandlung der Nachricht MM in eine Internet-Email und Aussenden als solche;
- "Facsimile": für eine Umwandlung der Nachricht MM in eine Fax-Nachricht und Aussenden als solche;
- "SMS": für eine Umwandlung in eine SMS-Kurznachricht und Aussenden als solche; oder
- "Voice-Mail": für eine Umwandlung der Nachricht MM oder von Textinhalten der Nachricht MM in eine Sprach-Nachricht und Aussenden als solche.

Die Informationselemente des Headers können entweder als Text codiert sein (z.B. ASCII) oder z.B. binär codiert werden, wie in der o.g. Literaturstelle [2] definiert. Für das zusätzliche Informationselement kann dabei die folgende binäre Kodierung eingesetzt werden:
Der Name des Kopffeldes bzw. des Header-Informationselementes "X-Mms-communication-means:" wird binär z.B. als "0x1B" kodiert und festgelegt.

Die Werte, welche das Kopffeld "X-Mms-communication-means:" annehmen kann, sind z.B. wie folgt kodiert und festgelegt:
X-Mms-communication-means: Communication-Means-Value = MM, Email, Facsimile, SMS oder Voice-Mail, mit den folgenden Werten:
   MM = <Octet 128>
   E-Mail = <Octet 129>
   Facsimile = <Octet 130>
   SMS = <Octet 131>
   Voice-Mail = <Octet 132>

Bei der eben beschriebenen zweiten Ausführungsform wird somit die Nachricht MM vom Server O-RS dann an die vom Absender durch das zusätzliche Informationselement festgelegte Teilnehmereinrichtung weitergeleitet, wenn der Server O-RS die Teilnehmereinrichtung als nicht zum eigenen MMS-Kommunikationssystem O-KS gehörig, nicht zum empfängerseitigen MMS-Kommunikationssystem R-KS1 gehörig oder nicht zum empfängerseitigen Emailsystem R-ES erkennt. Der Weg der Weiterleitung wird also mit höherer Priorität vom Server O-RS festgelegt, während die Vorgabe vom Absender eine "weiche" Bedingung ist, die mit niedrigerer Priorität vom Server O-RS berücksichtigt wird.

Bei einer dritten Ausführungsform wird diese Prioritätensetzung umgekehrt oder aufgehoben. In diesem Fall ist die Weiterleitung der Nachricht MM an die vom Absender festgelegte Art von Teilnehmereinrichtung zunächst zwingend für den Server O-RS. Die Spezifizierung der empfängerseitigen Teilnehmereinrichtung erfolgt hier entsprechen derjenigen der zweiten Ausführungsform (siehe Tabelle 1 etc.).

Im Falle der Umkehrung der Prioritätsreihenfolge muß der Server O-RS zunächst versuchen, die Nachricht MM an die angegebene Teilnehmereinrichtung weiterzuleiten, wobei bei einer nicht-MMS-fähigen Teilnehmereinrichtung die oben beschriebene Konvertierung soweit möglich erfolgt. Kann der Server O-RS die spezifizierte Teilnehmereinrichtung nicht kontaktieren oder die Nachricht bei dieser absetzen, so versucht der Server O-RS mit niedriger Priorität die Nachricht MM an eine ihm bekannte, dem Empfänger gehörige Teilnehmereinrichtung abzusetzen.

Alternativ wird bei der dritten Ausführungsform lediglich die Vorgabe des Absenders als einzige Priorität berücksichtigt. Konnte die vom Absender angegebene Teilnehmereinrichtung nicht erreicht oder die Nachricht MM dort nicht abgesetzt werden, so wird dem Absender lediglich eine negative Weiterleitungs-Bestätigung zurückgemeldet (s.u.).

Sowohl bei der zweiten als auch bei der dritten Ausführungsform kann eine Plausibilitätsprüfung daraufhin vorgenommen werden, ob ein Weiterleitungsversuch an eine bestimmte Art von empfängerseitiger Teilnehmereinrichtung nicht bereits in einem vorherigen Schritt ausgeführt wurde. In diesem Fall wird die Weiterleitung auf diesem Kommunikationsweg bzw. zu dieser Art von Teilnehmereinrichtung nicht nochmals versucht. Wurde in den obigen Fällen z.B. bereits eine Weiterleitung an ein Faxgerät als Teilnehmereinrichtung vergeblich versucht, so braucht in den nachfolgenden Schritten diese Form der Weiterleitung nicht nochmals geprüft werden. Der Server O-RS kann dies z.B. durch Setzen und Löschen von Merkern für die verschiedenen Arten von Teilnehmereinrichtungen.

Figur 2 zeigt die Bestätigung des Empfangs und/oder der Weiterleitung einer MMS-Nachricht MM durch den Server O-RS und/oder die Bestätigung des Empfangs der (z.T. konvertierten) Nachricht durch eine Teilnehmereinrichtung (O-UA, R-UA, R-ES, FAX, Telefon, SMS-Applikation etc.) und/oder der Kenntnisnahme durch den Empfänger. Welche der verschiedenen Stufen der Bestätigung vom absender- bzw. empfängerseitigen Kommunikationssystem zu liefern ist, hängt von den optionalen Vorgaben des Absenders ab, gemäß der gewählten Informationselemente in Tabelle 1.

Die hier dargestellte Bestätigung ist bei allen drei Ausführungsformen anwendbar, wobei bei der ersten Ausführungsform nur die Bestätigung des MMS- oder Email-Übertragungsweges möglich ist.

In Fig. 2 bedeutet der Pfeil MM1_SQ den Versand einer Nachricht MM vom Absender O-UA an den Server O-RS. MM1_SR ist die Bestätigung des Empfangs der Nachricht MM durch den Server O-RS. MM_FQ ist die Bestätigung der Weiterleiten/Aussenden der Nachricht MM als MMS-Nachricht oder umgewandelt, z.B. in eine Internet Email, ein Fax oder eine SMS. MM_FQ ist die Weiterleitung einer (umgewandelten) Nachricht an das empfängerseitige Kommunikationssystem R-KS1, R-KS2.

R-KS_DRQ ist die Bestätigung des Empfangs der Nachricht durch das empfängerseitige Kommunikationssystem R-KS1, R-KS2. Die Bestätigung kann hier entweder durch einen Server (z.B. R-RS) oder durch die Teilnehmereinrichtung selbst (z.B. bei Fax) erfolgen. Die Bestätigung wird vom Server O-RS ausgewertet (bei Fehlen der Bestätigung muß ggf. eine andere Teilnehmereinrichtung kontaktier werden s.o.) und ggf. an den Absender O-UA weitergeleitet.

R-KS_RRQ ist die Empfangsbestätigung des Empfängers, daß dieser die Nachricht gelesen oder zur Kenntnis genommen hat. R-KS_RRQ wird von der empfängerseitigen Teilnehmereinrichtung ggf. über einen Server (R-RS) an den absenderseitigen Server O-RS und von diesem an den Absender O-UA weitergeleitet. Je nach Art der Teilnehmereinrichtung können R-KS_RRQ und R-KS_DRQ zusammenfallen (z.B. bei Fax) oder werden von der Teilnehmereinrichtung nicht unterstützt.

Tabelle 2 zeigt angelehnt an die oben genannten Literaturstellen [1] und [2] aus welchen Informationen eine solche Bestätigung zusammengesetzt sein kann. Zusätzlich zu den bekannten Informationen fügt der absenderseitige Server O-RS die vom Absender und/oder vom Server O-RS getroffene Auswahl des Kommunikationssystems O-KS, R-KS1, R-KS2 bzw. des Kommunikationsweges für das Weiterleiten der Nachricht MM als Bestätigungselement hinzu. Dieses Bestätigungselement ist in Tabelle 2 in Fettdruck und kursiv dargestellt.

Indem der Server RS das tatsächlich verwendete Nachrichtenübermittlungssystem spezifiziert, erhält der Absender nicht nur eine Ja/Nein-Rückmeldung, ob seine Nachricht MM mit dem spezifizierten Übertragungsweg akzeptiert wurde, sondern im Falle einer Ablehnung auch die Information, welche empfängerseitige Teilnehmereinrichtung anstelle der erbetenen Teilnehmereinrichtung tatsächlich verwendet wurde.

In einer WAP-Implementierung des MMS-Dienstes kann, angelehnt an die o.g. Literaturstelle [2], eine beispielhafte Bestätigung des Versands einer MM in Text-Kodierung demnach wie folgt aussehen:

| | |
|---|---|
| X-Mms-Message-Type: | m-send-conf |
| X-Mms-Transaction-ID: | 123456789 |
| X-Mms-Version: | 1.0 |
| X-Mms-Message-ID: | user-xxxxxx-123456789 |
| ***X-Mms-communication-means:*** | ***Facsimile*** |

In dem o.g. Beispiel spezifiziert "X-Mms-Message-Type: m-send-conf" diese Nachricht als eine von einem absenderseitigen Server RS an einen Absender verschickte Bestätigung eines Nachrichtenversands, welche die gleiche Transaktionskennung "X-Mms-Transaction-ID: 123456789" enthält. Diese Transaktionskennung wird benutzt, um in der Teilnehmereinrichtung O-UA die Bestätigung des Versands auf den ursprünglichen MM-Versand abbilden zu können (s.u.), d.h. der ursprünglich absendenden Teilnehmereinrichtung für die ursprüngliche Nachricht MM eine Bestätigung geben zu können. Dabei wird vom absenderseitigen Server RS der Nachricht MM eine Nachrichtenidentität ("X-Mms-Message-ID: user-xxxxxx-123456789") vergeben, welche z.B. zur Rückverfolgung von Empfangs- und/oder Lese-Bestätigungen/Berichten verwendet wird.

Die Versionsnummer "X-Mms-Version: 1.0" wird zu Zwecken der Rückwärtskompatibilität benötigt.

Hat der Absender ein Kommunikationsmittel für das Weiterleiten/Aussenden der Nachricht MM festgelegt, so wird diese Auswahl vom absenderseitigen Server O-RS quittiert, indem der Server O-RS den Wert von "X-Mms-communication-means:" auf das tatsächlich gewählte Medium setzt. In diesem Fall hat der Server O-RS den Wert auf "Facsimile" gesetzt und somit dem Teilnehmer O-UA bestätigt, daß die Nachricht MM wie gefordert als Fax an den Empfänger versendet wurde.

Die Umsetzung des Dienstmerkmals der Spezifikation der empfangsseitigen Teilnehmereinrichtung durch den Absender (O-UA) erfolgt z.B. durch die Übermittlung eines zusätzliches Kopffeldes "X-Mms-communication-means:" in der WAP Message M-Send.req. Die Umsetzung des Dienstmerkmals der Angabe der Bestätigungsart erfolgt z.B. durch die Übermittlung eines zusätzlichen Kopffeldes "X-Mms-communication-means:" in der WAP Message M-Send.conf.

Ist für das empfängerseitige Kommunikationssystem z.B. R-KS2 das Absetzen einer Empfangsbestätigung vorgesehen und durch dieses handhabbar, so fordert der Server O-RS diese im Kommunikationsformat des empfängerseitige Kommunikationssystem R-KS2 an. Nachdem der Server O-RS die Bestätigung im Format des empfängerseitige Kommunikationssystem R-KS2 erhalten hat, wandelt er diese Bestätigung um und leitet sie wiederum zu der absendenden Teilnehmereinrichtung O-UA weiter.

Alternativ zu dem o.a. Beispiel zur WAP-Implementierung des MMS-Dienstes, kann ebenfalls angelehnt an [2], ein beispielhafter Versand einer (gleichen) Nachricht in MM in textueller Kodierung wie folgt aussehen:
X-Mms-Message-Type: m-send-reg
X-Mms-Transaction-ID: 123456789
X-Mms-Version: 1.0
To: +495341xxxxxx/***TYPE=Facsimile***
From: josef.xxxxxx@mms-xxxxxx.de
X-MMS-Message-Class: Personal
Date: Fri, 07 Feb 2001 09:58:19 +0100
X-MMS-Expiry: Fri, 07 Feb 2001 12:00:00 +0100
X-MMS-Delivery-Time: Fri, 07 Feb 2001 11:00:00 +0100
X-Mms-Priority: High
X-MMS-Read-Reply: Yes
X-MMS-Delivery-Report: Yes
X-MMS-Sender-Visibility: Yes
Subject: Foto vom Laboraufbau
Content-Type: text/plain;
Hallo Markus,
schicke mir bitte ganz dringend das Bild von unserem Laboraufbau zu!
Mit freundlichen Grüßen Josef XXXXXX
In diesem Beispiel geschieht die Auswahl des Kommunikationsmittels des Empfängers alternativ über eine Ergänzung der Empfänger-Adresse: "To: +495341xxxxxx/TYPE=Facsimile". Der Vorteil dieser Ausführung liegt darin, daß bei mehreren Empfängern einer MM die Auswahl des Kommunikationsmittels für jeden Empfänger separat geschehen kann. Ein Nachteil dieser Variante besteht jedoch darin, daß ohne die Einführung eines Felds für "X-Mms-communication-means:" zumindest in der Empfangsbestätigung an den Sender keine Rückmeldung über das tatsächlich gewählte Kommunikationsmittel möglich ist.

**Tabelle 1: Informationselemente eines Headers einer MMS-Nachricht MM beim Absenden von einer Teilnehmereinrichtung O-UA an einen absenderseitigen Server RS.**

| Beschreibung des Informations elements - angelehnt an [1] | Umsetzung als Kontrollfelder - angelehnt an [2] | Vorhandensein |
|---|---|---|
| Nachrichtentyp | "X-Mms-Message-Type: | Pflicht |
| Transaktionskennung | "X-Mms-Transaction-ID:" | Pflicht |
| Versionsnummer | "X-Mms-Version:" | Pflicht |
| Empfänger-Adresse(n) | "To:" / "CC:" / "Bcc | Pflicht |
| Absender-Adresse | "From:" | Option |
| Nachrichten-Klasse der MM | "X-MMS-Message-Class | Option |
| Zeitstempel (Datum und Uhrzeit) des Versands der MM | "Date:" | Option |
| Gültigkeitsdauer: Verfallszeitpunkt für die MM | "X-MMS-Expiry:" | Option |
| Gültigkeitsdauer: Frühester Zeitpunkt für das Weiterleite der MM | "X-MMS-Delivery-Time | Option |
| Priorität der MM | "X-MMS-Priority:" | Option |
| Anfrage eines Auslieferungs-Bestätigung für die MM | "X-MMS-Delivery-Report:" | Option |
| Anfrage eines Lese- Bestätigung für die MM | "X-MMS-Read-Reply:" | Option |
| Sichtbarkeit der Absender-Adresse beim Empfänger (Anfrage für Anonymität des Absenders) | "X-MMS-Sender-Visibility:" | Option |
| Titel/Betreff der MM | "Subject:" | Option |
| ***Anfrage für die Auswahl eines Kommunikationsmittels (z.B. Internet Email, Fax, SMS) für das Weiterleiten* der *MM*** | ***"X-MMS-communication* means:"** | ***Option*** |
| Typ des Inhalts der MM | "Content-Type:" | Pflicht |

**Tabelle 2: Informationselemente bei der Bestätigung des Versands/Empfangs einer Nachricht MM durch einen absenderseitigen Server O-RS.**

| Beschreibung des Informationselements - angelehnt an [1] | Umsetzung als Kontroll Felder - angelehnt an [2] | Vorhandensein |
|---|---|---|
| Status des Versands | "X-MMS-Response-Status:" | Pflicht |
| Zusätzlicher Text zur Beschreibung des Status des Versands | "X-MMS-Response-Text:" | Option |
| Nachrichtenidentität | "X-Mms-Message-ID:" | Pflicht |
| ***Status der Anfrage für die Auswahl eines Komnunikationsmittels für das Weiterleiten der MM (z.B. Internet Email, Fax, SMS)*** | ***"X-MMS-communication-means*:"** | ***Option*** |

## Patentansprüche

1. Verfahren zur Versendung einer MMS-Nachricht (MM), von einer ersten Teilnehmereinrichtung (O-UA) aus einem MMS-fähigen System (O-KS) an eine zweite Teilnehmereinrichtung (R-ES, Fax, Telefon), die nicht in ein MMS-fähiges System (O-KS, R-KS1) eingebunden ist oder keine MMS-Nachrichten (MM) empfangen kann, bei dem
- durch die erste Teilnehmereinrichtung (O-UA) oder den Benutzer der ersten Teilnehmereinrichtung (O-UA) das Nachrichtenübermittlungsformat der zweiten Teilnehmereinrichtung (R-ES, Fax, Telefon) durch ein oder mehrere Informationselemente der MMS-Nachricht (MM) und/oder durch eine Ergänzung des Adress-Kopffelds festgelegt wird,
- die MMS-Nachricht (MM) durch eine Schnittstelleneinrichtung (O_RS) des MMS-fähigen Systems (O-KS) entsprechend dem durch die erste Teilnehmereinrichtung (O-UA) festgelegten Nachrichtenübermittlungsformat der zweiten Teilnehmereinrichtung (R-ES, Fax, Telefon) konvertiert wird, und
- die konvertierte Nachricht an die zweite Teilnehmereinrichtung (R-ES, Fax, Telefon) weitergeleitet wird.

2. Verfahren nach Anspruch 1,
**dadurch gekennzeichnet,**
**daß** das eine oder die mehreren Informationselemente umfassen:
eine Empfängeradresse und/oder ein zusätzliches Informationselement der MMS-Nachricht (MM).

3. Verfahren nach Anspruch 2,
**dadurch gekennzeichnet,**
**daß** das zusätzliche Informationselement gemäß dem WAP-MMS-Encapsulation-Standard einen Informationselement-Namen oder Kopffeld-Namen in binärer Codierung "0x1B" erhält und die folgende Zuordnung der Nachrichtenformate erfolgt:
| | |
|---|---|
| MMS-Nachricht (MM) | = <Octet 128>, |
| Email | = <Octet 129>, |
| Faksimile | = <Octet 130>, |
| SMS | = <Octet 131>, |
| Voice-Mail | = <Octet 132>. |

4. Verfahren nach einem der vorhergehenden Ansprüche,
**dadurch gekennzeichnet,**
**daß** bei der Konvertierung der MMS-Nachricht (MM) die Nachricht mit einem Transferprotokoll für das ermittelte und/oder festgelegte Nachrichtenübermittlungsformat verknüpft wird.

5. Verfahren nach einem der vorhergehenden Ansprüche,
**dadurch gekennzeichnet,**
**daß** zumindest ein Teil der Informationselemente der MMS-Nachricht (MM) in Kontroll-Informationen konvertiert werden, die durch ein Kommunikationssystem (R-KS2) der zweiten Teilnehmereinrichtung (R-ES, Fax, Telefon) auswertbar sind.

6. Verfahren nach einem der vorhergehenden Ansprüche,
**dadurch gekennzeichnet,**
**daß** zumindest ein Teil der Informationselemente der MMS-Nachricht (MM) konvertiert und dem Inhalt der Nachricht für die zweite Teilnehmereinrichtung (R-ES, Fax, Telefon) hinzugefügt wird.

7. Verfahren nach einem der vorhergehenden Ansprüche,
**dadurch gekennzeichnet,**
**daß** die Schnittstelleneinrichtung (O-RS) des MMS-fähigen Systems (O-KS) an die erste Teilnehmereinrichtung (O-UA) eine Bestätigungsmeldung über den Empfang der MMS-Nachricht (MM) von der ersten Teilnehmereinrichtung (O-UA) und/oder den Weiterversand der MMS-Nachricht (MM) an die zweite Teilnehmereinrichtung (R-ES, Fax, Telefon) übermittelt.

8. Verfahren nach Anspruch 7,
**dadurch gekennzeichnet,**
**daß** die Bestätigungsmeldung eine Angabe über das Nachrichtenübermittlungsformat und/oder die Art der zweiten Teilnehmereinrichtung (R-ES, Fax, Telefon) und/oder eine Bestätigung der Weiterleitung mit dem von der ersten Teilnehmereinrichtung (O-UA) festgelegten Nachrichtenübermittlungsformat enthält.

9. Verfahren zur Weiterleitung einer MMS-Nachricht (MM) von einer ersten Teilnehmereinrichtung (O-UA) aus einem MMS-fähigen System (O-KS) an eine zweite Teilnehmereinrichtung (O-UA, R-UA, R-ES, Fax, Telefon) durch eine Schnittstelleneinrichtung (O-RS) des MMS-fähigen Systems (O-KS), wobei die Schnittstelleneinrichtung (O-RS) in Abhängigkeit von dem Ergebnis der jeweils vorhergehenden Prüfung einen, mehrere oder alle der folgenden Schritte durchführt:
a.) Prüfen, ob die zweite Teilnehmereinrichtung dem MMS-fähigen System (O-KS) angehört, und im positiven Fall, Weiterleiten der MMS-Nachricht (MM) an die zweite Teilnehmereinrichtung (O-UA) im System (O-KS);
b.) Prüfen, ob die zweite Teilnehmereinrichtung einem anderen MMS-fähigen System (R-KS1) angehört, und im positiven Fall, Weiterleiten der MMS-Nachricht (MM) an die zweite Teilnehmereinrichtung (R-UA) im anderen System (R-KS1);
c.) Prüfen, ob die zweite Teilnehmereinrichtung einem Emailsystem (R-ES) zuordenbar ist, und im positiven Fall, Konvertieren der MMS-Nachricht (MM) in ein Email-Format und Weiterleiten der konvertierten Nachricht an die zweite Teilnehmereinrichtung (R-ES).

10. Verfahren nach Anspruch 9,
**dadurch gekennzeichnet,**
**daß** nach dem Schritt c.):
d.) die MMS-Nachricht (MM) nicht weitergeleitet und die erste Teilnehmereinrichtung (O-UA) hierüber informiert wird.

11. Verfahren nach Anspruch 9 oder 10,
**dadurch gekennzeichnet,**
**daß** durch die erste Teilnehmereinrichtung (O-UA) oder den Benutzer der ersten Teilnehmereinrichtung (O-UA) das Nachrichtenübermittlungsformat der zweiten Teilnehmereinrichtung (R-UA, R-ES, Fax, Telefon) festgelegt wird und nach dem Schritt c.) oder anstelle des Schritts c.) der folgende Schritt durchgeführt wird:
c1.) Weiterleitung der MMS-Nachricht (MM) oder der in das festgelegte Nachrichtenübermittlungsformat konvertierten Nachricht an die von der ersten Teilnehmereinrichtung (O-UA) festgelegte zweite Teilnehmereinrichtung.

12. Verfahren nach Anspruch 9 oder 10,
**dadurch gekennzeichnet,**
**daß** durch die erste Teilnehmereinrichtung (O-UA) oder den Benutzer der ersten Teilnehmereinrichtung (O-UA) das Nachrichtenübermittlungsformat der zweiten Teilnehmereinrichtung (R-UA, R-ES, Fax, Telefon) festgelegt wird und vor dem Schritt a.) der folgende Schritt durchgeführt wird:
a0.) Weiterleitung der MMS-Nachricht (MM) oder der in das
festgelegte Nachrichtenübermittlungsformat konvertierten Nachricht an die von der ersten Teilnehmereinrichtung (O-UA) festgelegte zweite Teilnehmereinrichtung.

13. Verfahren nach einem der Ansprüche 9 bis 12,
**dadurch gekennzeichnet,**
**daß** das Verfahren parallel oder nacheinander für jede Teilnehmereinrichtung durchgeführt wird, die die MMS-Nachricht (MM) von der ersten Teilnehmereinrichtung (O-UA) erhalten soll.

14. Verfahren nach einem der Ansprüche 1 bis 13, **dadurch gekennzeichnet, daß** als Nachrichtenübermittlungsformat ein Email-, Fax- oder SMS-Format festgelegt wird.

15. Teilnehmereinrichtung für ein Kommunikationssystem (O-KS) zur Versendung von MMS-Nachrichten (MM) an eine andere Teilnehmereinrichtung (R-UA, R-ES, Fax, Telefon), wobei durch eine Steuereinrichtung der Teilnehmereinrichtung (O-UA) Informationselemente oder Kopffelder für die MMS-Nachricht generierbar sind,
**dadurch gekennzeichnet,**
**daß** die Steuereinrichtung der Teilnehmereinrichtung (O-UA) der ausgestaltet ist, daß ein Informationselement oder ein Kopffeld generiert wird, das das Nachrichtenformat für die andere Teilnehmereinrichtung (R-UA, R-ES, Fax, Telefon) angibt.

16. S chnittstelleneinrichtung für ein Kommunikationssystem (O-KS) zur Weiterleitung einer MMS-Nachricht (MM) von einer ersten Teilnehmereinrichtung (O-UA) an eine zweite Teilnehmereinrichtung (O-UA, R-UA, R-ES, Fax, Telefon), wobei die Schnittstelleneinrichtung (O-RS) eine Steuereinrichtung aufweist,
**dadurch gekennzeichnet,**
**daß** durch die Steuereinrichtung der Schnittstelleneinrichtung (O-RS) die MMS-Nachricht (MM) in eine Nachricht entsprechend einem durch die erste Teilnehmereinrichtung (O-UA) festgelegten Nachrichtenübermittlungsformat konvertierbar ist, und
**dass** die Steuereinrichtung zum Weiterleiten der konvertierten Nachricht an die zweite Teilnehmereinrichtung (R-ES, Fax, Telefon) ausgebildet ist.

## Claims

1. Method for sending an MMS message (MM) from a first subscriber device (O-UA) in an MMS-capable system (O-KS) to a second subscriber device (R-ES, fax, telephone) which is not linked into an MMS-capable system (O-KS, R-KS1) or is not able to receive MMS messages (MM),
wherein
- the first subscriber device (O-UA) or the user of the first subscriber device (O-UA) specifies the message transfer format of the second subscriber device (R-ES, fax, telephone) by means of one or more information elements of the MMS message (MM) and/or by means of an extension to the address header field,
- the MMS message (MM) is converted by an interface device (O-RS) of the MMS-capable system (O-KS) in accordance with the message transfer format of the second subscriber device (R-ES, fax, telephone) specified by the first subscriber device (O-UA), and
- the converted message is forwarded to the second subscriber device (R-ES, fax, telephone).

2. Method according to claim 1,
**characterised in that**
the one or more information elements include: a recipient address and/or an additional information element of the MMS message (MM).

3. Method according to claim 2,
**characterised in that**
the additional information element contains a binary-encoded information element name or header field name "0x1B" in accordance with the WAP MMS encapsulation standard and the message formats are assigned as follows:
| | |
|---|---|
| MMS message (MM) | = <octet 128>, |
| Email | = <octet 129>, |
| Facsimile | = <octet 130>, |
| SMS | = <octet 131>, |
| Voicemail | = <octet 132>. |

4. Method according to one of the preceding claims,
**characterised in that**
when the MMS message (MM) is converted the message is associated with a transfer protocol for the message transfer format that has been determined and/or specified.

5. Method according to one of the preceding claims,
**characterised in that**
at least some of the information elements of the MMS message (MM) are converted to control information which can be analysed by a communication system (R-KS2) of the second subscriber device (R-ES, fax, telephone).

6. Method according to one of the preceding claims,
**characterised in that**
at least some of the information elements of the MMS message (MM) are converted and added to the content of the message for the second subscriber device (R-ES, fax, telephone).

7. Method according to one of the preceding claims,
**characterised in that**
the interface device (O-RS) of the MMS-capable system (O-KS) transmits a confirmation report to the first subscriber device (O-UA) in confirmation of the receipt of the MMS message (MM) from the first subscriber device (O-UA) and/or the forwarding of the MMS message (MM) to the second subscriber device (R-ES, fax, telephone).

8. Method according to claim 7,
**characterised in that**
the confirmation report includes an indication of the message transfer format and/or the type of the second subscriber device (R-ES, fax, telephone) and/or a confirmation of the forwarding using the message transfer format specified by the first subscriber device (O-UA).

9. Method for forwarding an MMS message (MM) from a first subscriber device (O-UA) in an MMS-capable system (O-KS) to a second subscriber device (O-UA, R-UA, R-ES, fax, telephone) by means of an interface device (O-RS) of the MMS-capable system (O-KS), wherein the interface device (O-RS) performs one, more or all of the following steps as a function of the result of the preceding check in each case:
a.) checking whether the second subscriber device belongs to the MMS-capable system (O-KS) and, if this is the case, forwarding the MMS message (MM) to the second subscriber device (O-UA) in the system (O-KS);
b.) checking whether the second subscriber device belongs to another MMS-capable system (R-KS1) and, if this is the case, forwarding the MMS message (MM) to the second subscriber device (R-UA) in the other system (R-KS1);
c.) checking whether the second subscriber device can be assigned to an email system (R-ES) and, if this is the case, converting the MMS message (MM) to an email format and forwarding the converted message to the second subscriber device (R-ES).

10. Method according to claim 9,
**characterised in that**
following step c.):
d.) the MMS message (MM) is not forwarded and the first subscriber device (O-UA) is informed accordingly.

11. Method according to claim 9 or 10,
**characterised in that**
the first subscriber device (O-UA) or the user of the first subscriber device (O-UA) specifies the message transfer format of the second subscriber device (R-UA, R-ES, fax, telephone) and the following step is performed after step c.) or instead of step c.):
c1.) forwarding the MMS message (MM) or the message that has been converted to the specified message transfer format to the second subscriber device specified by the first subscriber device (O-UA).

12. Method according to claim 9 or 10,
**characterised in that**
the first subscriber device (O-UA) or the user of the first subscriber device (O-UA) specifies the message transfer format of the second subscriber device (R-UA, R-ES, fax, telephone) and the following step is performed before step a.):
a0.) forwarding the MMS message (MM) or the message that has been converted to the specified message transfer format to the second subscriber device specified by the first subscriber device (O-UA).

13. Method according to one of claims 9 to 12,
**characterised in that**
the method is performed out in parallel or sequentially for each subscriber device which is to receive the MMS message (MM) from the first subscriber device (O-UA).

14. Method according to one of claims 1 to 13,
**characterised in that**
an email, fax or SMS format is specified as the message transfer format.

15. Subscriber device for a communication system (O-KS) for sending MMS messages (MM) to another subscriber device (R-UA, R-ES, fax, telephone), wherein information elements or header fields for the MMS message can be generated by a control device of the subscriber device (O-UA),
**characterised in that**
the control device of the subscriber device (O-UA) is embodied in such a way that an information element or a header field is generated which indicates the message format for the other subscriber device (R-UA, R-ES, fax, telephone).

16. Interface device for a communication system (O-KS) for forwarding an MMS message (MM) from a first subscriber device (O-UA) to a second subscriber device (O-UA, R-UA, R-ES, fax, telephone), wherein the interface device (O-RS) has a control device,
**characterised in that**
the MMS message (MM) can be converted by the control device of the interface device (O-RS) to a message in accordance with a message transfer format specified by the first subscriber device (O-UA), and
the control device is embodied for forwarding the converted message to the second subscriber device (R-ES, fax, telephone) .

## Revendications

1. Procédé pour envoyer un message MMS (MM) d'un premier dispositif d'usager (O-UA) d'un système apte au MMS (O-KS) à un deuxième dispositif d'usager (R-ES, Fax, Telefon) qui n'est pas intégré dans un système apte au MMS (O-KS, R-KS1) ou qui ne peut pas recevoir de messages MMS (MM), dans lequel :
- le format de transmission de messages du deuxième dispositif d'usager (R-ES, Fax, Telefon) est déterminé par le premier dispositif d'usager (O-UA) ou par l'utilisateur du premier dispositif d'usager (O-UA) par un ou plusieurs éléments d'information du message MMS (MM) et/ou par un ajout au champ d'en-tête d'adresse ;
- le message MMS (MM) est converti par un dispositif d'interface (O_RS) du système apte au MMS (O-KS) conformément au format de transmission de messages du deuxième dispositif d'usager (R-ES, Fax, Telefon), lequel format est déterminé par le premier dispositif d'usager (O-UA) ; et
- le message converti est retransmis au deuxième dispositif d'usager (R-ES, Fax, Telefon).

2. Procédé selon la revendication 1, **caractérisé en ce que** l'un ou les plusieurs éléments d'information comprennent une adresse de destinataire et/ou un élément d'information additionnel du message MMS (MM).

3. Procédé selon la revendication 2, **caractérisé en ce que** l'élément d'information additionnel reçoit un nom d'élément d'information ou un nom de champ d'en-tête en codage binaire « Ox1B » conformément au standard d'encapsulation MMS WAP et **en ce que** se produit l'affectation suivante des formats de messages :
message MMS (MM) = <Octet 128>,
e-mail = <Octet 129>,
télécopie = <Octet 130>,
SMS = <Octet 131>,
voice mail = <Octet 132>.

4. Procédé selon l'une des revendications précédentes, **caractérisé en ce que**, lors de la conversion du message MMS (MM), le message est associé à un protocole de transfert pour le format de transmission de messages établi et/ou déterminé.

5. Procédé selon l'une des revendications précédentes, **caractérisé en ce qu'**au moins une partie des éléments d'information du message MMS (MM) est convertie en informations de contrôle qui peuvent être évaluées par un système de communication (R-KS2) du deuxième dispositif d'usager (R-ES, Fax, Telefon).

6. Procédé selon l'une des revendications précédentes, **caractérisé en ce qu'**au moins une partie des éléments d'information du message MMS (MM) est convertie et ajoutée au contenu du message pour le deuxième dispositif d'usager (R-ES, Fax, Telefon).

7. Procédé selon l'une des revendications précédentes, **caractérisé en ce que** le dispositif d'interface (O-RS) du système apte au MMS (O-KS) transmet au premier dispositif d'usager (O-UA) un message de confirmation relatif à la réception du message MMS (MM) du premier dispositif d'usager (O-UA) et/ou à la retransmission du message MMS (MM) au deuxième dispositif d'usager (R-ES, Fax, Telefon).

8. Procédé selon la revendication 7, **caractérisé en ce que** le message de confirmation contient une information sur le format de transmission de messages et/ou la nature du deuxième dispositif d'usager (R-ES, Fax, Telefon) et/ou une confirmation de la retransmission avec le format de transmission de messages déterminé par le premier dispositif d'usager (O-UA).

9. Procédé de retransmission d'un message MMS (MM) d'un premier dispositif d'usager (O-UA) d'un système apte au MMS (O-KS) vers un deuxième dispositif d'usager (O-UA, R-UA, R-ES, Fax, Telefon) par un dispositif d'interface (O-RS) du système apte au MMS (O-KS), le dispositif d'interface (O-RS) exécutant, en fonction du résultat du contrôle qui précède respectivement, une, plusieurs ou toutes les étapes suivantes :
a.) contrôler si le deuxième dispositif d'usager fait partie du système apte au MMS (O-KS) et, dans l'affirmative, retransmission du message MMS (MM) au deuxième dispositif d'usager (O-UA) dans le système (0-KS) ;
b.) contrôler si le deuxième dispositif d'usager fait partie d'un autre système apte au MMS (R-KS1) et, dans l'affirmative, retransmission du message MMS (MM) au deuxième dispositif d'usager (R-UA) dans l'autre système (R-KS1) ;
c.) contrôler si le deuxième dispositif d'usager peut être associé à un système d'e-mail (R-ES) et, dans l'affirmative, conversion du message MMS (MM) dans un format d'e-mail et retransmission du message converti au deuxième dispositif d'usager (R-ES).

10. Procédé selon la revendication 9, **caractérisé en ce que**, à la suite de l'étape c.),
d.) le message MMS (MM) n'est pas retransmis et le premier dispositif d'usager (O-UA) en est informé.

11. Procédé selon la revendication 9 ou 10, **caractérisé en ce que** le format de transmission de messages du deuxième dispositif d'usager (R-UA, R-ES, Fax, Telefon) est déterminé par le premier dispositif d'usager (O-UA) ou par l'utilisateur du premier dispositif d'usager (O-UA) et **en ce que** l'étape suivante est exécutée, après l'étape c.) ou au lieu de l'étapes c.) :
c1.) retransmission du message MMS (MM), ou du message converti dans le format de transmission de messages déterminé, au deuxième dispositif d'usager déterminé par le premier dispositif d'usager (O-UA) .

12. Procédé selon la revendication 9 ou 10, **caractérisé en ce que** le format de transmission de messages du deuxième dispositif d'usager (R-UA, R-ES, Fax, Telefon) est déterminé par le premier dispositif d'usager (O-UA) ou par l'utilisateur du premier dispositif d'usager (O-UA) et **en ce que** l'étape suivante est exécutée avant l'étape a.) :
A0.) retransmission du message MMS (MM), ou du message converti dans le format de transmission de messages déterminé, au deuxième dispositif d'usager déterminé par le premier dispositif d'usager (O-UA) .

13. Procédé selon l'une des revendications 9 à 12, **caractérisé en ce que** le procédé est exécuté parallèlement ou successivement pour chaque dispositif d'usager qui doit recevoir le message MMS (MM) du premier dispositif d'usager (O-UA) .

14. Procédé selon l'une des revendications 1 à 13, **caractérisé en ce qu'**est déterminé, en tant que format de transmission de messages, un format d'e-mail, de télécopie ou SMS.

15. Dispositif d'usager pour un système de communication (0-KS) pour envoyer des messages MMS (MM) à un autre dispositif d'usager (R-UA, R-ES, Fax, Telefon), un dispositif de commande du dispositif d'usager (O-UA) permettant de générer des éléments d'information ou des champs d'en-tête pour le message MMS,
**caractérisé en ce que** le dispositif de commande du dispositif d'usager (O-UA) est réalisé de manière telle qu'est généré un élément d'information ou un champ d'entête qui indique le format de message pour l'autre dispositif d'usager (R-UA, R-ES, Fax, Telefon).

16. Dispositif d'interface pour un système de communication (O-KS) pour la retransmission d'un message MMS (MM) d'un premier dispositif d'usager (O-UA) à un deuxième dispositif d'usager (O-UA, R-UA, R-ES, Fax, Telefon), le dispositif d'interface (O-RS) comportant un dispositif de commande,
**caractérisé en ce que** :
- le message MMS (MM) peut être converti, par le dispositif de commande du dispositif d'interface (ORS), en un message selon un format de transmission de messages déterminé par le premier dispositif d'usager (O-UA) ; et
- le dispositif de commande est réalisé pour retransmettre le message converti au deuxième dispositif d'usager (R-ES, Fax, Telefon).
